# EUROPEAN PATENT SPECIFICATION

(11) **EP 1 425 970 B1**
(45) Date of publication and mention of the grant of the patent: **21.03.2007**
(21) Application number: 03425491.2
(22) Date of filing: 22.07.2003
(51) Int. Cl.: A22C 7/00, A21C 11/00

(54) **Press for mincemeat with tools and interchangeable dies for the production of meat pizzas and cakes**
Presse für Hackfleisch mit Werkzeugen und auswechselbaren Matrizen für die Herstellung von Fleischpizzas und Kuchen
Presse pour la viande hachée avec des outils et des moules interchangeables pour la production de pizzas de viande et de gâteaux

(30) Priority: 03.12.2002 IT BA20020028
(43) Date of publication of application: 09.06.2004
(73) Proprietor: Convertini, Nicola, Martina Franca (TA) (IT)
(72) Inventor: Convertini, Nicola, Martina Franca (TA) (IT)
(74) Representative: Spadaro, Marco

(56) References cited:
- EP-A- 0 715 810
- GB-A- 222 165
- GB-A- 862 273
- GB-A- 2 144 320
- US-A- 3 669 605
- US-A- 4 579 745
- US-A- 5 469 779
- US-B1- 6 245 370

## Description

The press for the realization of semi finished and finished product of meat let the butchers obtain crushed mincemeat of regular size in rapid time (see e.g. GB-A-2 144 320).

The press for the manufacturing of crushed mincemeat has existed for long time and is spread in butcher shops, supermarkets and in food industry.

Those consist essentially of a prismatic coupling, constituted by a cylinder and a piston, both supplied with a flat bottom, mutually complanate and with the same rotation axle. Usually, the cylinder is integral with the frame of the press, while the piston is movable in the co-axial direction to the own axle of rotation. Rarely it is possible to find a press in which the movable part is the cylinder, while the piston is fixed and integral with the upper part of the frame of the press.

Inserting mincemeat in the cylinder and obliging the piston to enter in, the mincemeat shapes into a disk.

Presses available on the market allow to manufacture mincemeat disks of few centimetres of diameter 10 or 12; the shape of the obtained product is always the same approximately a circular disk commonly called hamburger. its width depends exclusively on the quantity of introduced mincemeat, as the geometry of the tools is chosen such that the diameter of the piston is a little less of the diameter of the cylinder, in fact the mincemeat lays completely and uniformly on the bottom of the cylinder as it does not find any possible exit during the crushing.

Some butchers propose crushed mincemeat of a much bigger diameter then that of the common hamburgers, being seasoned like a traditional Naples pizza, and baked in order to realize the so-called meat pizza.

Other butchers propose meat cakes. They have the shape of a thick disk and are constituted by a thin envelope of mincemeat filled with of tomato sauce, mushrooms and what the chefs preferences are.

Also in this case the preparation of those particular cakes passes through the production of the meat envelope.

This consists of two thin meat disks that, at present, must be prepared with rolling pin and fingers.

The former, called "bottom" must have a diameter as sufficiently big as to be easily laid on all the inner surface, including side bottom and surface, of a common aluminium oven circular tray, while the second disk, called "lid", has the same diameter of the bottom of the tray.

The aluminium tray, lined with a layer of meat called "bottom", is filled up with the stuffing, over which the littler disk called "lid" is put, then the work proceeds with fingers in such a way to obtain the perfect joint of the two disks, along their perimetral circumference.

The big problem is to be able to obtain a uniform thickness of disks of such big dimensions, and a geometrically defined shape too. The presses supplied from the well-known technique do not allow to replace the couple of tools used to get meat disks of a bigger diameter then the present ten-twelve centimetres and in general of variable shape and dimension.

Furthermore, the present system of removal of the meat disk with the fingers is absolutely inadequate for disks of diameter, for example, of thirty or forty centimetres; in fact the removal of a product of such dimensions with the sole hands would bring about its certain damage, in addition to the extreme difficulty to lay out the aluminium tray.

The purpose of the present invention is that of supplying a model of press that allows the butchers, but even the pizza -maker and restaurants in general, to easily prepare meat pizzas and cakes of any shape and dimension over forty centimetres of diameter.

For such a purpose the present model solves the problem of not being able to realize crushed meat of diverse dimensions and shapes, supplying a press with interchangeable tools, which expects the regulation of the mutual penetration of the tools and an innovative system for the removal of the finished product. Such a model of press is described in more details as follows with the aid of some drawings, which represent a preferred realization.
Dwg 1) Frontal representation of the press
Dwg 2) Representation of the side view A of the press
Dwg 3) Representation of the over view B of the press
Dwg 4) Representation of the section CC of the side view A.
Dwg 5) Representation of the section DD of the section CC.
Dwg 6) Representation of the section DD of the section CC with tray and crushed meat after the press of the mincemeat with the piston recovering in action.
Dwg 7) Representation of the section EE of the over view B
Dwg 8) Representation of the axle equipped with a lever and cam for the starting of the recovering piston.
Dwg. 9) Representation of the section of the axle equipped of cam for the starting of the recovering piston.

This invention in a preferred execution consists of a press of which movable tool a particular piston 1) truncated-conic shaped. It is fixed to a movable axle 14) through a "bayonet" slot 14.1) or threaded slot.

This movable axle 14) works in the slide 16) built on the upper part 5) of the frame of the press, moreover, it is supplied with a toothing 14.3) which engages with a toothed wheel 15) see Dwgs 1),2) and 7). The operator who stands in front of the press, pulling the lever towards himself 8), integral with said toothed wheel 15) leads the movable axle 14) to sliding towards the bottom of the slide 16).

When the lever is released, the attracting action 13) pushes upwards the movable axle 14) acting on the ring-nut 14.4) which is integral with it at its upper end; this action leads the toothed wheel 15) to turn opposite to the previous one and the lever 8) to come back to the rest position.

A hollow cylinder 7) supplied with appropriate inner threading 7.1) on the base-less extreme, is screwed in the complementary threading 5.2) integral with the top of the upper part of the press 5), in order to hide the upper part of the movable axle 14) and the recalling action 13) with the aim to get a safer press.

The lower tool consists of a valve 2) adapted to hold within its concavity aluminium trays 3) of common market availability, so that the inner surface of the tool perfectly fits to the whole outer surface of the tray. The most important innovation of the present invention consists of the possibility to press the meat directly on the aluminium trays.

The bottom of the lower tool 2) is constituted by the upper surface of the base 9) of the press, while the frame 11) adapted to fit to the perimetral surface of the trays is interchangeable according to the trays and fixed to the base 9) by means of an appropriate number of screws 17).

Being the tray 3) and the piston 1) truncated-conic shaped, it is necessary the introduction of the regulation of the penetration of the piston and an appropriate dosage of the mincemeat 18), in order that during the press, the latter lays over all the inner surface of the tray without uselessly overflowing; in fact the overflow of the mincemeat is possible considering the truncated-conic shape of the tools, different from those truncated-cylindrical of the known technique.

The regulation of the travel of the movable axle 14) occurs by means of a screw 4) screwed on the upper part 5) of the frame of the press, perpendicular to the outer frontal surface 5.1), so that it enters in to reach the slide within which the movable axle 8) is engaged. In this axle there is a vertical slot 14.2) of which depth increases as long as advancement gets on downwards along the axie, so to appear oblique in the section EE of Dwg 7). The end 4.1) of the screw 4) enters in the slot of the movable axle. The descent of the movable axle ends when the extremity 4.1) of the screw touches the bottom of the slot 14.2). On turning the knob 6) the penetration of the screw 4) of the slot 14.2) is regulated and as a consequence the thickness of the disk of meat is determined. An appropriate system of counting printed on the surface 5.1) can help the operator to set the knob 6).

The different dosage of the mincemeat and the regulation of the travel of the movable axle allow the production of pizzas and cakes.

Always through an appropriate dosage and an appropriate regulation of the travel of the movable axle for the production of pizzas 14) one manages in such a way that the crush lays exclusively on the bottom of the tray.

For the production of cakes, it is necessary to realize both the types of crushes. In fact, once the tray of which concavity is completely covered with mincemeat 18) is full of stuffing, it is enough to lay on the disk made as pizzas turning over the relevant tray and acting with the fingers for a perfect cohesion of both the crushed along the relevant circumferences. During the turn over, the removal of this crushed-pizza from its tray can be made easier by means of a preventive interposition of anti-adherent paper between the bottom of the tray and the crushed mincemeat.

At the centre of the bottom of the lower valve there is a circular hole, within which there is a piston 12) of appropriate diameter called "recover piston", see Dwg 5).

The upper surface of the piston is perfectly flat and lined up with the bottom of the lower valve 2) during the press of the mincemeat.

When the upper tool 1) lifts, after the press, the recover piston, started, for example, from a shaft 10) supplied with cam 10.2), integral with the lever 10.1), pushes upwards the tray 3) that in this way can be easily caught from the border with the hands.

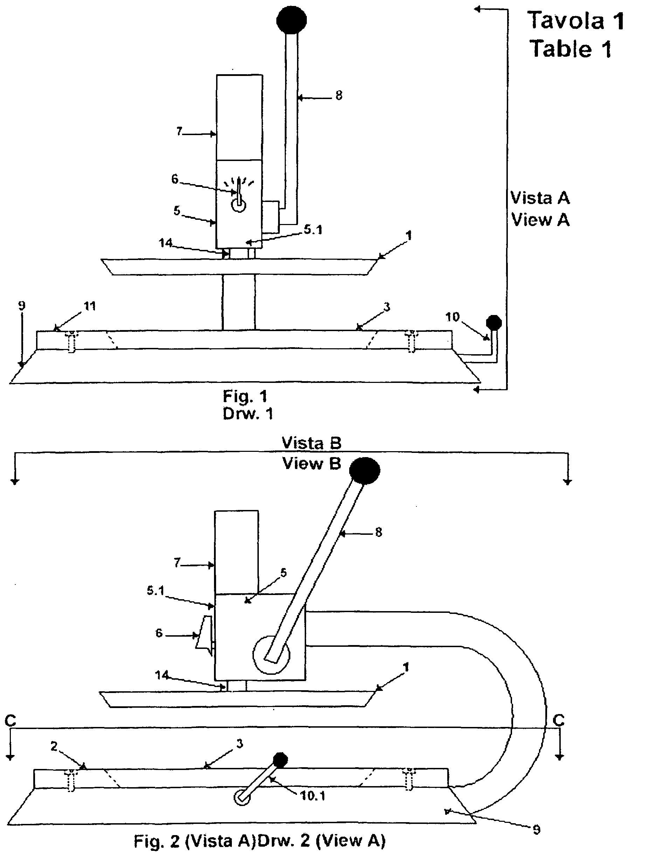

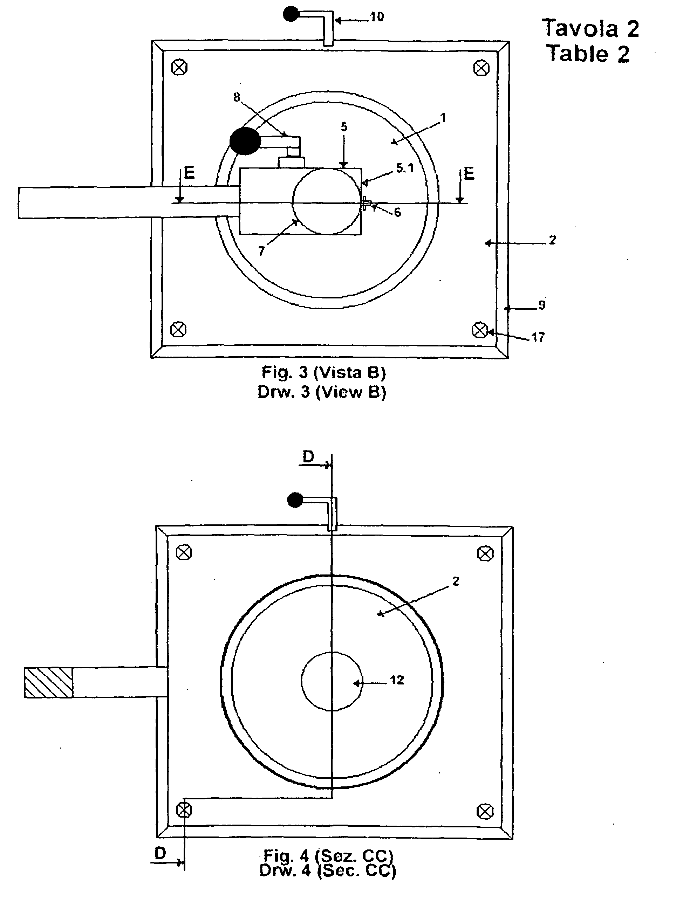

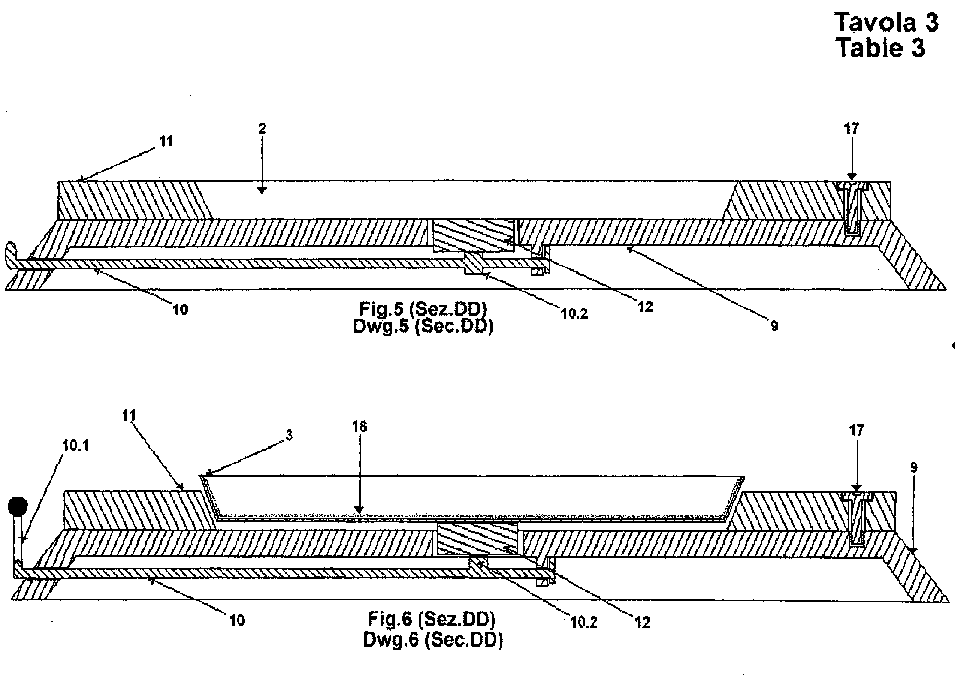

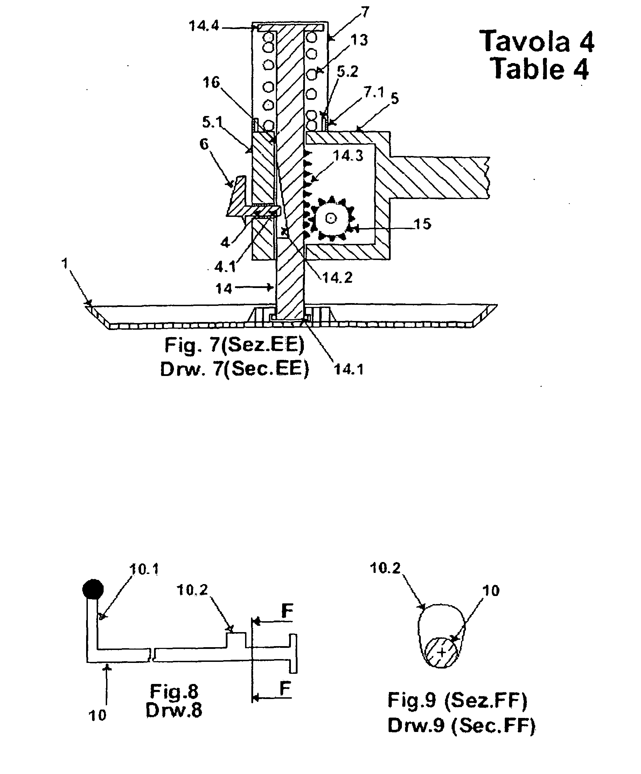

## Claims

1. Press for mincemeat comprising:
a) a piston (1) of truncated-conical shape interchangeably fixed to a movable axle (14) through a slot, said axle working within a slide (16) built in the upper part (5) of the frame of said press,
b) a valve (2) with a concavity of truncated-conical shape adapted to hold an aluminium tray (3), said tray fitting into said concavity, said valve being connected to the base (9) of the press by means of screws (17);
c) a lever (8) connected with said movable axle (14) to lower said piston (1) into the cavity of said valve (2);
d) a screw (4) on the upper part (5) of the frame of the press, regulating the travel of said movable axle (14);
wherein the outer diameter of said piston (1) is lower than the outer diameter of the cavity of said valve (2) and said piston (1) and the cavity of said valve (2) are fitted in a male-female interconnection allowing overflow of the crushed mincemeat through the space created by the difference of the outer diameters of the concavity of said valve (2) and said piston (1) and said overflow is determined by the regulation of said screw (4).

2. Press according to claim 1, wherein a recover piston (12) is provided in said base (9) in order to push upward said tray (3).

3. A process for preparing a meat cake by means of the press of claim 1, comprising the following steps:
a) fitting a first tray (3) into the concavity of said valve (2);
b) putting a first dose of meat in the concavity of valve (2);
c) setting said screw (4) so that, when operating said piston (1) by means of said lever (8) and said meat is crushed to obtain a uniform disk over the bottom of said tray (3), no overflow of meat occurs through the space created by the difference of the outer diameters of the concavity of said valve (2) and said piston (1);
d) withdrawing said first tray (3) from said valve (2);
e) fitting a second tray (3) into the concavity of said valve (2);
f) putting a second dose of meat in the concavity of said valve (2);
g) setting said screw (4) so that, when operating said piston (1) by means of said lever (8) and said meat is crushed to obtain a uniform disk over the bottom of said tray (3), and further operating said piston (1) by means of said lever (8) overflow of meat occurs through the space created by the difference of the outer diameters of the concavity of said valve (2) and said piston (1);
h) stuffing said second meat disk;
i) withdrawing said second tray (3) from said valve (2);
j) superimposing said first meat disk over said second, stuffed disk.

4. Process according to claim 3, wherein withdrawal of tray (3) in steps d) and i) is obtained with the press of claim 2.

5. Process according to claim 3 or 4, wherein a sheet of anti-adherent paper is layered on the bottom of said first tray (3) before meat dose.

6. Use of the press of claims 1-2 for the preparation of pizzas and cakes.

## Patentansprüche

1. Eine Presse für Hackfleisch, umfassend:
a) einen Kolben (1) von kegelstumpfartig konischer Form, welcher austauschbar an einer beweglichen Achse (14) durch einen Schlitz fixiert ist, wobei besagte Achse innerhalb einer Führung (16) arbeitet, die im oberen Teil (5) des Gestells der besagten Presse angeordnet ist,
b) ein Ventil (2) mit einer Höhlung von kegelstumpfartig konischer Form, ausgelegt um eine Aluminiumschale (3) aufzunehmen, wobei besagte Schale in besagte Höhlung hineinpasst und das Ventil mit dem Fuß (9) der Presse durch Schrauben (17) verbunden ist;
c) einen Hebel (8) verbunden mit besagter beweglicher Achse (14), um besagten Kolben (1) in die Höhlung besagten Ventils (2) abzusenken;
d) eine Schraube (4) im oberen Teil (5) des Gestells der Presse, welche den Hub besagter Beweglicher Achse (14) reguliert;
**dadurch gekennzeichnet, dass** der Außendurchmesser des Kolbens (1) kleiner ist als der Außendurchmesser der Höhlung besagten Ventils (2) und besagter Kolben (1) und die Höhlung besagten Ventils (2) in eine männlich-weibliche Verbindung passen, so dass ein Überfließen des zerquetschten Hackfleisches durch den Raum ermöglicht wird, welcher durch den Unterschied zwischen den Außendurchmessern der Höhlung des besagten Ventils (2) und des besagten Kolbens (1) geschaffen ist und dass besagtes Überfließen durch die Regulieren besagter Schraube (4) bestimmt wird.

2. Eine Presse gemäß Anspruch 1, **dadurch gekennzeichnet, dass** ein Rückholkolben (12) in besagtem Fuß (9) bereitgestellt ist, um besagte Schale (3) aufwärts zu drücken.

3. Ein Verfahren zur Bereitung eines Fleischkuchens mit einer Presse gemäß Anspruch 1, umfassend die folgenden Schritte:
a) Einpassen einer ersten Schale (3) in die Höhlung des besagten Ventils (2);
b) Eingeben einer ersten Portion Fleisch in die Höhlung besagten Ventils (2);
c) Einstellen der Schraube (4) derart, dass bei Betätigung besagten Kolbens (1) durch besagten Hebel (8) besagtes Fleisch zerquetscht wird, um eine gleichmäßige Scheibe über dem Boden besagter Schale (3) zu erhalten, kein Überfließen von Fleisch durch den Raum auftritt, der geschaffen ist durch den Unterschied zwischen den Außendurchmessern besagter Höhlung des Ventils (2) und besagten Kolbens (1);
d) Zurückziehen besagter erster Schale (3) von besagtem Ventil (2);
e) Einpassen einer zweiten Schale (3) in die Höhlung besagten Ventils (2);
f) Eingeben einer zweiten Portion Fleisch in die Höhlung besagten Ventils (2);
g) Einstellen besagter Schraube (4) derart, dass bei Betätigung besagten Kolbens (1) durch besagten Hebel (8) und Zerquetschen besagten Fleisches, um eine gleichmäßige Scheibe über dem Boden besagter Schale (3) zu erhalten, und weiterer Betätigung besagten Kolbens (1) mittels des Hebels (8) ein Überfließen von Fleisch durch den Raum auftritt, der sich aus dem Unterschied der Außendurchmesser der Höhlung des besagten Ventils (2) und des besagten Kolbens (1) ergibt;
h) Besetzen besagter zweiter Fleischscheibe;
i) Zurückziehen besagter zweiter Schale (3) von besagtem Ventil (2);
j) Aufbringen besagter erster Fleischscheibe auf besagter zweiter, gefüllter Scheibe.

4. Ein Verfahren gemäß Anspruch 3, **dadurch gekennzeichnet, dass** Zurückziehen der Schale (3) in den Schritten d) und i) mit der Presse gemäß Anspruch 2 bewirkt wird.

5. Ein Verfahren gemäß Anspruch 3 oder 4, **dadurch gekennzeichnet, dass** vor der Fleischzugabe ein Blatt nicht anhaftenden Papiers auf den Boden besagter erster Schale (3) gelegt wird.

6. Die Verwendung einer Presse nach den Ansprüchen 1-2 für die Bereitung von Pizzas und Kuchen.

## Revendications

1. Presse pour viande hachée, comprenant :
a) un piston (1) de forme tronconique fixée de manière interchangeable à un axe mobile (14) par l'intermédiaire d'une rainure, ledit axe opérant dans une coulisse (16) intégrée dans la partie supérieure (5) du bâti de ladite presse,
b) un tiroir (2) avec un volume concave de forme tronconique destiné à contenir un plateau en aluminium (3), ledit plateau se logeant dans ledit logement concave, ledit tiroir étant monté à l'aide de vis (17) sur le socle (9) de la presse;
c) un levier (8) accouplé avec ledit axe mobile (14) pour abaisser ledit piston (1) dans la cavité dudit tiroir (2) ;
d) une vis (4) sur la partie supérieure (5) du bâti de la presse, régulant le déplacement dudit axe mobile (14) ;
le diamètre extérieur dudit piston (1) étant inférieur au diamètre extérieur de la cavité dudit tiroir (2) et ledit piston (1) et la cavité dudit tiroir (2) étant montés sous la forme d'un assemblage mâle-femelle permettant à la viande hachée écrasée de déborder à travers l'espace créé par la différence de diamètre extérieur de la partie concave dudit tiroir (2) et dudit piston (1), et ledit débordement est déterminé par le réglage de ladite vis (4).

2. Presse selon la revendication 1, dans laquelle un piston de rappel (12) est présent dans ledit socle (9) afin de pousser vers le haut ledit plateau (3).

3. Procédé pour préparer un gâteau de viande à l'aide de la presse selon la revendication 1, comprenant les étapes consistant à :
a) installer un premier plateau (3) dans le volume concave dudit tiroir (2) ;
b) mettre une première dose de viande dans le volume concave dudit tiroir (2) ;
c) régler ladite vis (4) de façon que, lors de l'actionnement dudit piston (1) à l'aide dudit levier (18) et lorsque ladite viande est écrasée pour obtenir un disque uniforme au fond dudit plateau (3), il n'y a pas de débordement de viande dans l'espace créé par la différence de diamètre extérieur entre le volume concave dudit tiroir (2) et ledit piston (1) ;
d) retirer ledit plateau (3) dudit tiroir (2);
e) installer un deuxième plateau (3) dans le volume concave dudit tiroir (2) ;
f) mettre une deuxième dose de viande dans le volume concave dudit tiroir (2) ;
g) régler ladite vis (4) de façon que, lors de l'actionnement dudit piston (1) à l'aide dudit levier (8) et lorsque ladite viande est écrasée pour obtenir un disque uniforme sur le fond dudit plateau (3), et lors d'un nouvel actionnement dudit piston (1) à l'aide dudit levier (8), un débordement de viande survienne dans l'espace créé par la différence de diamètre extérieur entre le volume concave dudit tiroir (2) et dudit piston (1);
h) garnir ledit deuxième disque de viande ;
i) retirer ledit deuxième plateau (3) dudit tiroir (2) ;
j) superposer ledit premier disque de viande audit deuxième disque garni.

4. Procédé selon la revendication 3, dans lequel le retrait du plateau (3) lors des étapes d) et i) s'effectue à l'aide de la presse selon la revendication 2.

5. Procédé selon la revendication 3 ou 4, dans lequel une feuille de papier antiadhérent est appliquée au fond dudit premier plateau (3) avant la dose de viande.

6. Utilisation de la presse selon les revendications 1 et 2 pour la préparation de pizzas et de gâteaux.
